# EUROPEAN PATENT APPLICATION

(11) **EP 2 362 692 A1**
(43) Date of publication of application: **31.08.2011**
(21) Application number: 10153977.3
(22) Date of filing: 18.02.2010
(51) Int. Cl.: H04W 28/26

(54) **Method and a device for determining which resource has to be allocated to a home base station**

(71) Applicant: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Khanfouci, Mourad, 35708 Rennes Cedex 7 (FR); Abouchami, Rachad, 35708 Rennes Cedex 7 (FR)
(74) Representative: Maillet, Alain

(57) **Abstract**

The present invention concerns a method for determining which resource among a group of resources of a wireless cellular telecommunication network has to be allocated to a home base station among a group of home base stations. The method comprises the steps of:
- determining, for each resource of the group of resources, the usage of the resource by the home base stations of the group of home base stations,
- selecting the resource of which the usage is the lowest among the determined usages,
- checking if the selected resource is used by neighbouring home base stations of the home base station,
- determining that the selected resource has to be used by the home base station if the selected resource is not used by the or each neighbouring home base station of the home base station.

## Description

The present invention relates generally to a method and a device for determining which resource among a group of resources of a wireless cellular telecommunication network has to be allocated to a home base station.

Classical wireless cellular telecommunication networks provide coverage of wireless services in wide areas. Macro-cells are used to pave the coverage area of the wireless cellular telecommunication network.

A macro-cell has a coverage area of around ten km².

Each cell is controlled by one base station, and resources of the wireless cellular telecommunication network are allocated to the base station.

At the setup of a base station, the base station configures the radio interface, the network interface, i.e. configures the connexion links with neighbour base stations and servers and starts transmitting on a broadcast channel, together with pilot signals and so on using allocated resources.

Resources are for example and in a non limitative way, frequency band used for transferring signals to mobile terminals and/or receiving signals from mobile terminals, synchronization sequences enabling the access of the mobile terminals to the base station and serving as physical layer cell identifier in the wireless cellular telecommunication network, time slots used for transferring signals to mobile terminals and/or receiving signals from mobile terminals, frequency bandwidth partition that is used for inter cell interference coordination purposes between base stations of the wireless cellular telecommunication network and that is not reused between neighbouring base stations, set of orthogonal channelization codes that must not be used between neighbouring base stations or any combination of the preceding resources that has to be mapped to neighbouring base station for conflict or collision avoidance.

The mobile terminal, which is located in the cell managed by the base station, can make measurements on signals transmitted by the base station and surrounding base stations so as to prepare/trigger a handover from the base station which is currently managing the cell in which the mobile terminal is located to another cell managed by one of the surrounding base stations, or to allow the base station handling the mobile terminal to perform load balancing, interference management coordinated multi-point transmission or any other function that necessitates the collaboration of the base station with its neighbouring base stations.

For that, neighbouring base stations should not share common resources of the wireless cellular telecommunication network in order to avoid conflicts between neighbouring base stations.

Neighbouring base stations use minimal set of resources for resources usage in order to minimize the effect of their resources allocation on the global resources of the wireless cellular telecommunication network.

It has been proposed to extend the coverage of Public Land Mobile Networks or (PLMN) wireless cellular telecommunication networks with pico-cells and femto-cells.

A pico-cell has a coverage area of around few thousands m², while a femto-cell has a coverage area of around hundred m². As for macro cells, each base station which manages one pico or femto-cell should not use common resources as neighbouring base stations and/or neighbouring home base stations.

Base stations managing pico or femto cells are classically set up within home or offices, they are usually named home base stations.

Home base stations enable a restricted number of mobile terminals to use their resources in order to have access to the wireless cellular telecommunication network. The home base stations managing pico or femto cells are associated to these allowed mobile terminals as they allow these mobile terminals to use their resources in order to have access to the wireless cellular telecommunication network.

The aim of the invention is therefore to propose a method and a device which intend to enable home base stations to allocate minimum resources such that the same resource is not used between two neighbouring base stations and that resources reuse in the network is minimized.

To that end, the present invention concerns a method for determining which resource among a group of resources of a wireless cellular telecommunication network has to be allocated to a home base station among a group of home base stations, characterised in that the method comprises the steps of:
- determining, for each resource of the group of resources, the usage of the resource by the home base stations of the group of home base stations,
- selecting the resource of which the usage is the lowest among the determined usages,
- checking if the selected resource is used by neighbouring home base stations of the home base station,
- determining that the selected resource has to be used by the home base station if the selected resource is not used by the or each neighbouring home base station of the home base station.

The present invention also concerns a device for determining which resource among a group of resources of a wireless cellular telecommunication network has to be allocated to a home base station among a group of home base stations, characterised in that the device comprises:
- means for determining, for each resource of the group of resources, the usage of the resource by the home base stations of the group of home base stations,
- means for selecting the resource of which the usage is the lowest among the determined usages,
- means for checking if the selected resource is used by neighbouring home base stations of the home base station,
- means for determining that the selected resource has to be used by the home base station if the selected resource is not used by the or each neighbouring home base station of the home base station.

Thus, the selected resource will not be in conflict with the resources of the neighbouring base stations and the reuse of the resources of the wireless cellular telecommunication network is minimized.

The minimization of the resource usage will save resources for the wireless cellular telecommunication network and minimize the average confusion of the user terminals when handover occurs to the wireless cellular telecommunication network from neighbouring home base stations.

According to a particular feature, the selected resource has not to be used by the home base station if the usage of the selected resource is equal to the usage of the resource currently used by the home base station.

Thus, it ensures resource usage minimization per home base station and minimizes the resources reuse in the wireless cellular telecommunication network.

According to a particular feature, the method is executed iteratively a predetermined number of times.

Thus, the present invention ensures to converge from specific initial resource allocation to the minimum reuse resource allocation.

According to a particular feature, the method is executed as far as none of the home base station uses a same resource as one neighbouring home base station of the home base station.

Thus, the present invention minimizes the resources usage in the wireless cellular telecommunication network and reduces the conflicts between neighbouring home base stations resources.

According to a particular feature, the method comprises further step of increasing the group of resources as far as none of the home base station uses a same resource as one neighbouring home base station of the home base station.

Thus, by increasing resources if conflict and/or confusion is still present in the wireless cellular telecommunication network after the execution of the method, the present invention finds a resource allocation scheme which uses the minimum amount of resources to allocated home base stations.

According to a particular feature, the method is executed by the home base station, the usages of the resources are determined from the usages of other home base stations of the group of home base stations received by the home base station and the method comprises further step of transferring the usage of resources by the home base station to each other home base station the usage of resources of which is not received by the home base station.

Thus, by accumulating the usage of the resources from all the home base stations of the wireless cellular telecommunication network, the present invention gets a significant measure of the resources usage in the wireless cellular telecommunication network and avoids counting the resources usage twice between the neighbouring home base stations.

According to a particular feature, the method is executed by a coordinator which manages the group of home base stations.

Thus, the coordinator can maintain resources usage relevant information and allocates minimum resources to minimize the confusion over the home base stations it manages.

The coordinator can evaluate the current reuse of the resources of home base stations it manages and increase the number of available resources if necessary.

The coordinator can decrease the available resources if after the application of the present invention there is unused resources in the initially allocated group of resources.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :
Fig. 1 represents a wireless cellular telecommunication network in which the present invention is implemented;
Fig. 2 is a diagram representing the architecture of a coordinator in which the present invention is implemented ;
Fig. 3 is a diagram representing the architecture of a home base station in which the present invention is implemented ;
Figs. 4a and 4b disclose an example of an algorithm executed by each home base station to the present invention ;
Figs. 5a to 5t show different values that can take vectors determined by home base stations according to the present invention ;
Fig. 6 discloses an example of an algorithm executed by the coordinator according to the present invention.

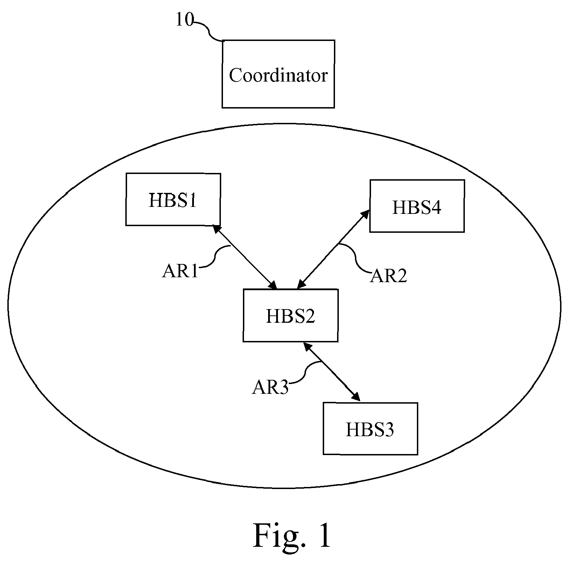

**Fig. 1** represents a wireless cellular telecommunication network in which the present invention is implemented.

The wireless cellular telecommunication network is composed of plural cells not shown in the Fig. 1 of home base stations HBS1, HBS2, HBS3 and HBS4 and of a coordinator 10.

The coordinator 10 manages plural home bases stations HBS. The coordinator 10 may also be named access gateway or coordination gateway.

Only four home base stations HBS1 to HBS4 are represented in Fig. 1 for the sake of clarity but the wireless cellular telecommunication network comprises a more important number of home base stations HBS.

The home base stations HBS1 to HBS4 are named also femto base stations or pico base stations.

Only one coordinator 10 is shown in Fig. 1 for the sake of clarity but the wireless cellular telecommunication network comprises a more important number of coordinators 10.

In the Fig. 1, the coordinator 10 is a device which is different from base stations, home base stations HBS or a core network device. In other examples of realization, the coordinator 10 may be comprised in one home base station HBS1 to HBS4 or may be comprised in a base station not shown in Fig. 1 or in one core network device.

As some of home base stations HBS1 to HBS4 are close to each other, the cells of the home base stations overlap each other. When cells of two home base stations overlap, the two home base stations are considered as to be neighbours and neighbour home base station HBS should not use the same resources of the wireless cellular telecommunication network in order to avoid conflicts.

The home base station HBS1 is neighbour of the home base station HBS2 as shown by the arrow noted AR1.

The home base station HBS3 is neighbour of the home base station HBS2 as shown by the arrow noted AR3.

The home base station HBS4 is neighbour of the home base station HBS2 as shown by the arrow noted AR2.

The home base station HBS2 is then neighbour of the home base stations HBS1, HBS3 and HBS4.

Each home base station HBS is linked to a telecommunication network not shown in the Fig. 1. The telecommunication network enables the home base stations HBS1 to HBS4 to exchange messages between each other and to exchange messages to the coordinator 10 or the telecommunication network enables neighbour home base stations HBS to exchange messages through particular links established on the telecommunication network and which enable home base stations HBS to exchange messages via the coordinator 10.

According to the invention, the coordinator 10 or each home base station HBS:
- determines, for each resource of the group of resources, the usage of the resource by the home base stations of the group of home base stations,
- selects the resource of which the usage is the lowest among the determined usages,
- checks if the selected resource is used by neighbouring home base stations of the home base station,
- determines that the selected resource has to be used by the home base station if the selected resource is not used by the or each neighbouring home base station of the home base station.

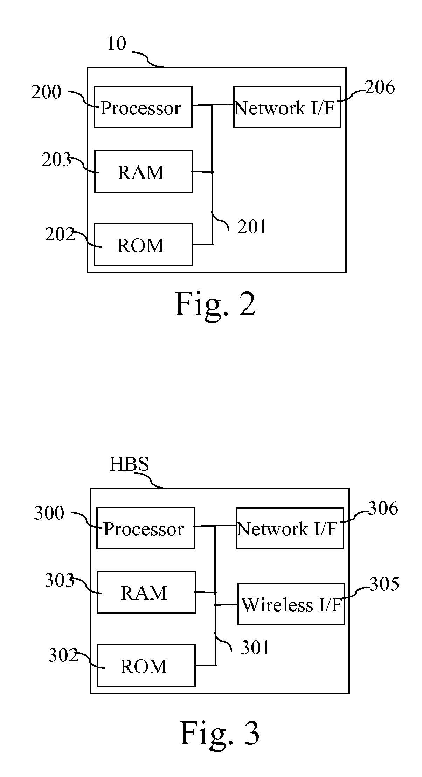

**Fig. 2** is a diagram representing the architecture of a coordinator in which the present invention is implemented.

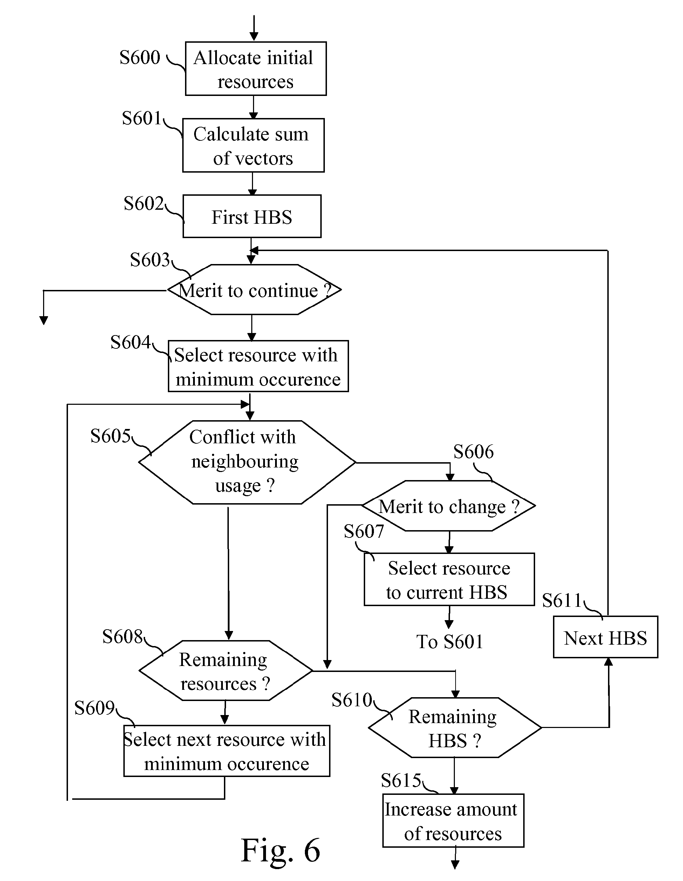

The coordinator 10 has, for example, an architecture based on components connected together by a bus 201 and a processor 200 controlled by the program as disclosed in Fig. 6.

It has to be noted here that, instead of being based on a processor 200, the architecture of the coordinator 10 may be based on dedicated integrated circuits.

The bus 201 links the processor 200 to a read only memory ROM 202, a random access memory RAM 203 and a network interface 206.

The memory 203 contains registers intended to receive variables and the instructions of the program related to the algorithm as disclosed in Fig. 6.

The processor 200 controls the operation of the network interface 206.

The read only memory 202 contains instructions of the programs related to the algorithm as disclosed in Fig. 6, which are transferred, when the coordinator 10 is powered on, to the random access memory 203.

The coordinator 10 is connected to the telecommunication network through the network interface 206.

For example, the network interface 206 is a DSL (Digital Subscriber Line) modem, or an ISDN (Integrated Services Digital Network) interface, etc.

Through the network interface 206, the coordinator 10 may transfer and/or receive messages to or from core network devices of the wireless cellular telecommunication network.

The network interface 206 is used also for relaying messages and data between home base stations.

**Fig. 3** is a diagram representing the architecture of a home base station in which the present invention is implemented.

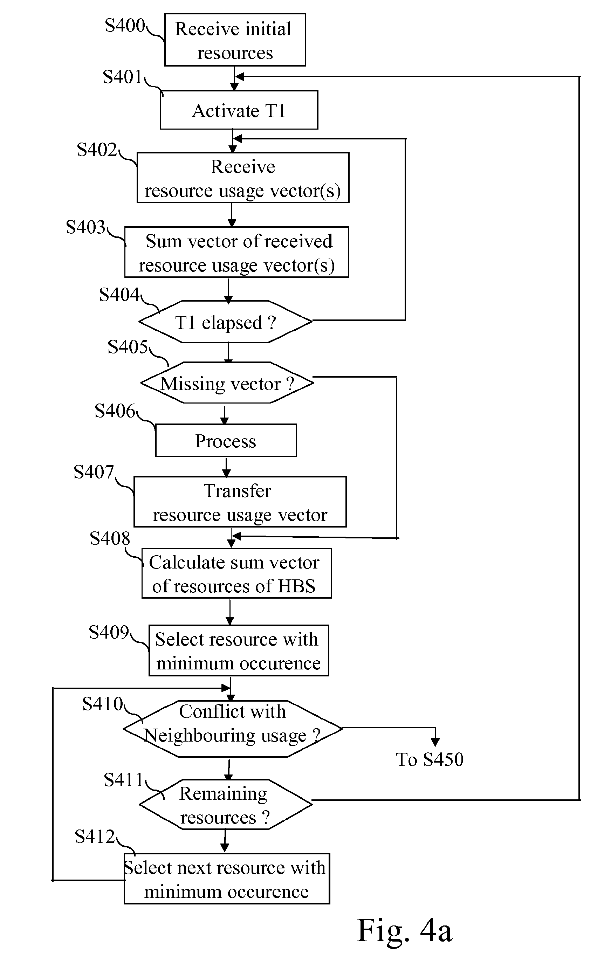

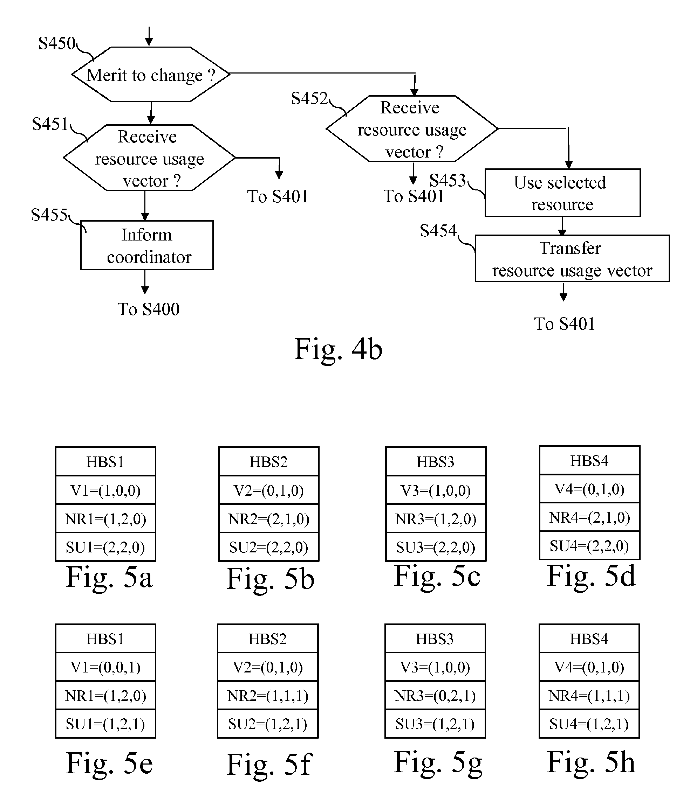

Each home base station HBSi with i=1 to 4 has, for example, an architecture based on components connected together by a bus 301 and a processor 300 controlled by the program as disclosed in Figs. 4a and 4b.

It has to be noted here that, instead of being based on a processor, the architecture of the home base station HBSi may be based on dedicated integrated circuits.

The bus 301 links the processor 300 to a read only memory ROM 302, a random access memory RAM 303, a wireless interface 305 and a network interface 306.

The RAM memory 303 contains registers intended to receive variables and the instructions of the program related to the algorithm as disclosed in Figs. 4a and 4b.

The processor 300 controls the operation of the network interface 306 and controls the operation of the wireless interface 305.

The read only memory ROM 302 contains instructions of the program related to the algorithm as disclosed in Figs. 4a and 4b, which are transferred, when the home base station HBSi is powered on, to the random access memory 303.

The home base station HBS is connected to a telecommunication network through the network interface 306. For example, the network interface 306 is a DSL (Digital Subscriber Line) modem, or an ISDN (Integrated Services Digital Network) interface, etc.

Through the network interface I/F 306, the home base station HBS may transfer and/or receive messages to and/or from the coordinator 10 and may transfer and/or receive messages to and/or from other home base stations HBS.

The home base station HBS may also transfer and/or receive messages to and/or from other home base stations HBS through the wireless interface I/F 305.

**Fig. 4** discloses an example of an algorithm executed by each home base station to the present invention.

More precisely, the present algorithm is executed by the processor 300 of each home base station HBSi with i=1 to 4.

The present algorithm is executed periodically or on particular events.

At step S400, the processor 300 receives information indicating which resource or resources of the wireless cellular telecommunication network are allocated to it. Information are transferred by the coordinator 10 which manages the home base station HBS.

In a variant, the processor 300 selects randomly which resource or resources of the wireless cellular telecommunication network the home base station HBS will use.

For example, one over three different resources may be allocated to each home base station HBS.

The different resources are represented by coefficients of a vector the dimension of which is equal to the number of available resources. "1" value of a coefficient of a vector Vi denotes that the corresponding resource is allocated to the home base station HBSi and "0" value of a coefficient of the vector Vi denotes that the corresponding resource is not allocated to the home base station HBSi. The vector Vi is named the resource usage vector of the home base station HBSi.

For example, the resource usage vector V 1 of the home base station HBS1 is equal to (1,0,0), the resource usage vector V2 of the home base station HBS2 is equal to (0,1,0), the resource usage vector V3 of the home base station HBS3 is equal to (1,0,0) and the resource usage vector V4 of the home base station HBS4 is equal to (0,1,0).

This initial resource allocation shows a conflict in the resource allocated to the HBS2 and HBS4.

The initial resource allocation shows a reuse of resource between HBS4 and HBS3 which are not neighbours.

At next step S401, the processor 300 activates a timer noted T 1. The timer T1 value is different for each home base station HBS. The timer T1 value is for example selected randomly in a predetermined set of values.

At next step S402, the processor 300 detects the reception, through the network interface I/F 306 or the wireless interface I/F 305 of at least one resource usage vector transferred by at least one home base station HBS managed by the coordinator 10.

At next step S403, the processor 300 forms a sum vector of resource usage vectors NRi, where i is the indicia of the home base station HBSi, the coefficients values of which are representative of the number of the usage of the corresponding resource received from the home base stations HBSj managed by the coordinator 10 with j=1 to 4 *j≠i.*

According to the above mentioned example, the sum vector of resource usage vectors NR1 of the home base station HBS1 is equal to (1,2,0) as the home base stations HBS2 and HBS4 use the second resource while the home base station HBS3 uses the first resource.

The sum vector of resource usage vectors NR2 of the home base station HBS2 is equal to (2,1,0), the sum vector of resource usage vectors NR3 of the home base station HBS3 is equal to (1,2,0) and the sum vector of resource usage vectors NR4 of the home base station HBS4 is equal to (2,1,0).

At next step S404, the processor 300 checks if the timer T1 is elapsed. If the timer T1 is elapsed, the processor 300 moves to step S405. Otherwise, the processor 300 returns to step S402.

At step S405, the processor 300 checks if at least one resource usage vector has not been received.

If each resource usage vector has been received, the processor 300 moves to step S408. Otherwise, the processor 300 moves to step S406.

At step S406, the processor starts a process. The process may be to request to the coordinator 10 each resource usage vector which has not been received and to add it or them to the sum vector of resource usage vectors. The process may be to notify to the coordinator 10 that the home base station or stations which should send the resource usage vector or vectors may have trouble or may be powered off.

At next step S407, the processor 300 commands the transfer if the resource usage Vi has not been previously transferred at step S454 which will be disclosed hereinafter, through the network interface 306 or the wireless interface 305, of the resource usage vector Vi of its home base station HBSi to the at least one home base station HBS from the set of the home base stations HBS managed by the coordinator 10 from which it has not received the resources usage vector.

At next step S408, the processor 300 calculates a sum vector SUi, where i is the indicia of the home base station HBSi, the coefficients values of which are equal to the sum of the resource usage vector Vi of its home base station HBSi and of the sum vector of resource usage vectors NRi.

According to the above mentioned example, the vectors SUi with i=1 to 4 are equal to (2,2,0).

The above mentioned vectors are shown in Fig. 5a to 5d.

The **Fig. 5a** represents the vectors V1, NR1 and SU1 determined by the home base station HBS1. The **Fig. 5b** represents the vectors V2, NR2 and SU2 determined by the home base station HBS2. The **Fig. 5c** represents the vectors V3, NR3 and SU3 determined by the home base station HBS3. The **Fig. 5d** represents the vectors V4, NR4 and SU4 determined by the home base station HBS4.

At next step S409, the processor 300, for example the processor 300 of the home base station HBS1, selects the resource which corresponds to the lowest coefficient value of the vector SU1 .

According to the above mentioned example, the third resource is selected.

At next step S410, the processor 300 of the home base station HBS1 checks if the selected resource corresponds to a resource used by at least one neighbouring home base station HBS, i.e. the neighbour home base station HBS2 using the resource usage vector V2.

If the selected resource corresponds to a resource used by a neighbour home base station HBS, the processor moves to step S411. Otherwise, the processor 300 moves to step S450 of Fig. 4b.

At step S411, the processor 300 checks if at least one resource has not been already selected. If at least one resource has not been already selected, the processor 300 moves to step S412. Otherwise, the processor 300 returns to step S401.

At step S412, the processor 300 selects the resource which corresponds to the next upper SU1 coefficient value and returns to step S410.

At step S450 of Fig. 4b, the processor 300 checks if there is merit to use the selected resource.

There is no merit to use the selected resource if the corresponding coefficient value is equal to the value of the coefficient which corresponds to the resource currently used by the home base station HBS1.

There is no merit to use the selected resource if there is no more conflict for the home base stations HBS1 or HBS4 managed by the coordinator 10. Such case occurs when each coefficient of the sum vector SUi is equal to one or zero..

There is no merit to use the resource if the resource is already used by at least one neighbouring base station. The determination of resource usage can be done through communication between the home base station and the neighbouring base station, through measurements or through information triggered by the coordinator 10.

There is no merit to use the resource if the loop constituted by steps S409 to S453 has been executed a predetermined number of times.

There is merit to use the selected resource otherwise.

If there is merit to use the selected resource, the processor 300 moves to step S452. Otherwise, the processor 300 moves to step S451.

At step S451, the processor 300 waits a predetermined time duration for the reception of a new resource usage vector determined by one other home base station HBS managed by the coordinator 10.

If a resource usage vector is received, the processor 300 returns to step S401. Otherwise, the processor 300 moves to step S455 and commands the transfer through the network interface I/F 305 of a message notifying that resource selection generates at least one conflict between neighbouring home base stations HBS.

The coordinator 10 may increase the amount of resources to be allocated to the home base stations HBS that the coordinator 10 manages.

The processor 300 returns to step S400 for the reception of new resources from the coordinator 10.

According to the above mentioned example, the processor 300 of the home base station HBS 1 determines that there is a merit to use the selected resource.

At step S452, the processor 300 checks if a new resource usage vector determined by one other home base station HBS managed by the coordinator 10 is received. If a new resource usage vector is received, the processor 300 returns to step S401. Such case occurs when another home base station HBS uses a new resource and informs home base stations HBS earlier than home base station HBS1.Otherwise, the processor 300 moves to step S453.

The processor 300 updates the resource usage vector V1 to the value (0,0,1) and uses the resource at step S453.

At next step S407, the processor 300 commands the transfer, through the network interface 306, of the resource usage vector Vi of its home base station HBSi to each home base station HBS managed by the coordinator 10.

After that, the processor 300 returns to step S401.

At step S402, the processor 300 of the home base station HBS4 detects the reception through the network interface 306 of the resource usage vectors determined by each other home base station HBS managed by the coordinator 10, modifies the sum vector of resource usage vectors and modifies at step S407 the sum vector SU1 stored in the home base station HBS1 to the value (1,2,1).

The vector NR2 of the home base station HBS2 is equal to (1,1,1), the vector NR3 of the home base station HBS3 is equal to (0,2,1) and the vector NR4 of the home base station HBS4 is equal to (1,1,1).

The above mentioned vectors are shown in Fig. 5e to 5h.

The **Fig. 5e** represents the vectors V1, NR1 and SU1 determined by the home base station HBS1. The **Fig. 5f** represents the vectors V2, NR2 and SU2 determined by the home base station HBS2. The **Fig. 5g** represents the vectors V3, NR3 and SU3 determined by the home base station HBS3. The **Fig. 5h** represents the vectors V4, NR4 and SU4 determined by the home base station HBS4.

The processor 300 selects at step S408 the first resource, i.e. the resource corresponding to the first coefficient of the source usage vector V1, checks at step S409 if the selected resource corresponds to a resource used by the neighbour home base station HBS2 and moves to step S450.

At step S450, the processor 300 checks if there is merit to use the selected resource.

As there is no merit, the processor 300 waits for the reception of a new usage vector determined by one other home base station HBS managed by the coordinator 10.

In parallel, the processor 300 of the home base station HBS2, from the sum vector SU2 which is equal to (1,2,1), selects successively the first and third coefficients of the source usage vector V2, determines that they are in conflict with resources used by neighbouring home base stations HBS3 and HBS1 and does not modify the resource used by the home base station HBS2.

In parallel, the processor 300 of the home base station HBS3, from the sum vector SU3 which is equal to (1,2,1), selects the third coefficient of the source usage vector V3, determines that there is no merit to use it and does not modify the resource that the home base station HBS3 uses.

In parallel, the processor 300 of the home base station HBS4, from the sum vector SU4 which is equal to (1,2,1), selects the first coefficient of the source usage vector V4, determines that there is merit to use it, updates the resource usage vector V4 to the value (1,0,0), modifies the resource the home base station HBS4 uses, transfers the resource usage vector V4 at step S454 and returns to step S401.

At step S402, the processor 300 of the home base station HBS4 detects the reception through the network interface 306 of the resource usage vectors determined by each other home base station HBS managed by the coordinator 10, modifies the sum vector NR4 of resource usage vectors and modifies at step S407 the sum vector SU4 stored in the home base station HBS1 to the value (2,1,1).

The vector NR1 of the home base station HBS1 is equal to (2,1,0), the vector NR2 of the home base station HBS2 is equal to (2,0,1) and the vector NR3 of the home base station HBS3 is equal to (1,1,1).

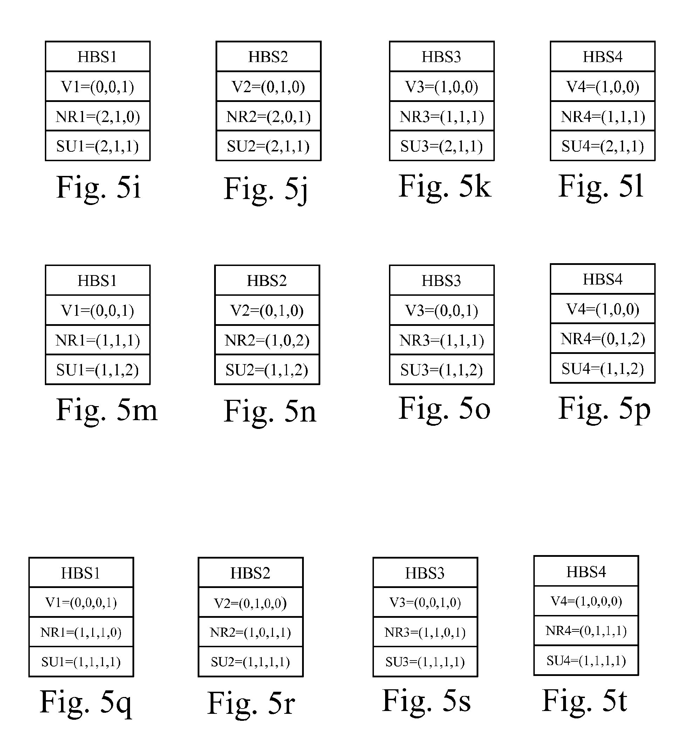

The above mentioned vectors are shown in Fig. 5i to 5l.

The **Fig. 5i** represents the vectors V1, NR1 and SU1 determined by the home base station HBS1. The **Fig. 5****j** represents the vectors V2, NR2 and SU2 determined by the home base station HBS2. The **Fig. 5k** represents the vectors V3, NR3 and SU3 determined by the home base station HBS3. The **Fig. 5l** represents the vectors V4, NR4 and SU4 determined by the home base station HBS4.

In parallel, the processor 300 of the home base station HBS1, from the sum vector SU1 which is equal to (2,1,1), identifies the resource used by the home base station HBS1 as the one which corresponds to the lowest coefficient value and does not change of resource.

In parallel, the processor 300 of the home base station HBS2, from the sum vector SU2 which is equal to (2,1,1), selects the third coefficient of the source usage vector V2, determines that it is in conflict with resource used by a neighbouring home base station HBS and does not modify the resource used by the home base station HBS2.

In parallel, the processor 300 of the home base station HBS3, from the sum vector SU3 which is equal to (2,1,1), selects the third coefficient of the source usage vector V3, determines that there is merit to use it, modifies the resource used by the home base station HBS3 and transfers the resource usage vector V3 to each home base station managed by the coordinator 10.

At step S402, the processor 300 of the home base station HBS3 detects the reception through the network interface 306 of the resource usage vectors determined by each other home base station HBS managed by the coordinator 10, modifies the sum vector NR3 of resource usage vectors and modifies at step S407 the sum vector SU3 stored in the home base station HBS1 to the value (1,1,2).

The sum vector of resource usage vectors NR1 of the home base station HBS1 is equal to (1,1,1), the vector NR2 of the home base station HBS2 is equal to (1,0,2) and the vector NR4 of the home base station HBS4 is equal to (0,1,2).

The above mentioned vectors are shown in Fig. 5m to 5p.

The **Fig. 5m** represents the vectors V1, NR1 and SU1 determined by the home base station HBS1. The **Fig. 5n** represents the vectors V2, NR2 and SU2 determined by the home base station HBS2. The **Fig. 5o** represents the vectors V3, NR3 and SU3 determined by the home base station HBS3. The **Fig. 5p** represents the vectors V4, NR4 and SU4 determined by the home base station HBS4.

The present algorithm ends when there is no more conflict between neighbouring home base stations HBS, for example, because resources have been changed a predetermined number of times or when the amount of resources reused in the network (evaluated as the maximum of the sum vector) is below a predetermined level that is signalled by the coordinator 10 through the network interface 306 or other home base stations managed by the coordinator 10.

During the execution of the algorithm of Figs. 4, the coordinator 10 may allocate more resources if some are available in order to minimize the resources reuse by the home base stations managed by the coordinator 10.

This can be done for example if at least one home base station transmits the maximum value of its sum vector to the coordinator 10 after a predetermined number of runs of the algorithm of Figs. 4.

The coordinator 10 may request extra resources to core network device of the wireless cellular telecommunication network or from a macro base station, if extra resources are available. The coordinator 10 transfers larger dimension resource usage vectors Vi to the home base stations.

An example of this procedure is given in Figs. **5q** to **5t**.

The **Fig. 5q** represents the vectors V1, NR1 and SU1 determined by the home base station HBS1 when an extra resource is allocated to the home base stations HBS to HBS4 managed by the coordinator 10.

The **Fig. 5r** represents the vectors V2, NR2 and SU2 determined by the home base station HBS2 when an extra resource is allocated to the home base stations HBS to HBS4 managed by the coordinator 10.

The **Fig. 5s** represents the vectors V3, NR3 and SU3 determined by the home base station HBS3 when an extra resource is allocated to the home base stations HBS to HBS4 managed by the coordinator 10.

The **Fig. 5t** represents the vectors V4, NR4 and SU4 determined by the home base station HBS4 when an extra resource is allocated to the home base stations HBS to HBS4 managed by the coordinator 10.

The processor 200 of the coordinator 10 transfers through the network interface I/F 206 the newly allocated resources to the base stations HBS1, HBS2, HBS3, HBS4.

The processor 300 of each home base station HBS augments the size of the vectors by one and sets the new coefficient value of the resource usage vector to zero.

In parallel, the processor 300 of the home base station HBS1 forms the sum vector of resource usage vectors NR1 which is equal to (1,1,1,0) and changes the resource used by the home base station HBS1 as the one which corresponds to the lowest coefficient value.

In parallel, the processor 300 of the home base station HBS2 forms the sum vector of resource usage vectors NR2 which is equal to (1,0,1,1), selects the second coefficient, determines that it is in conflict with resource used by a neighbouring home base station HBS and does not modify the resource used by the home base station HBS2.

In parallel, the processor 300 of the home base station HBS3, from the sum vector of resource usage vectors NR3 which is equal to (1,1,0,1) identifies the currently used resource by the home base station HBS3 as the one which is the less used and does not perform any change.

In parallel, the processor 300 of the home base station HBS4, from the sum vector of resource usage vectors NR4 which is equal to (0,1,1,1) identifies the currently used resource by the home base station HBS4 as the one which is the less used and does not perform any change.

The sum vector SU1 of the home base station HBS1 is equal to (1,1,1,1), the sum vector SU2 of the home base station HBS2 is equal to (1,1,1,1) and the sum vector NR4 of the home base station HBS4 is equal to (1,1,1,1).

No more conflicts occur between home base stations HBS managed by the coordinator 10.

**Fig. 6** discloses an example of an algorithm executed by the coordinator according to the present invention.

More precisely, the present algorithm is executed by the processor 200 of the coordinator 10.

The present algorithm is executed periodically or on particular events.

At step S600, the processor 200 determines information indicating which resources of the wireless cellular telecommunication network are allocated to each home base station HBS the coordinator 10 manages, for example on a random basis.

At next step S601, the processor 200 calculates a sum vector SU the coefficients values of which are equal to the sum of the corresponding coefficients of the vectors NR1 to NR4.

At next step S602, the processor 200 selects a first home base station HBS.

At next step S603, the processor 200 checks if there is merit to continue the present algorithm.

There is no merit to continue the present algorithm if the loop constituted by the steps S605 to S611 has been executed a predetermined number of times or if there is no conflict between the neighbouring home base stations HBS that the coordinator 10 manages.

There is merit to continue the present algorithm otherwise.

If there is merit to continue, the processor 200 moves to step S605. Otherwise, the processor 200 interrupts the present algorithm.

At step S604, the processor 200 selects the resource which corresponds to the lowest coefficient value of the vector SU.

At next step S605, the processor 200 checks if the selected resource corresponds to a resource used by a neighbour home base station HBS of the selected home base station HBS.

If the selected resource corresponds to a resource used by a neighbour home base station HBS, the processor 200 moves to step S608. Otherwise, the processor 200 moves to step S606.

At step S608, the processor 200 checks if at least one resource has not been already selected. If at least one resource has not been already selected, the processor 200 moves to step S609. Otherwise, the processor 200 moves to step S610.

At step S609, the processor 200 selects the resource which corresponds to the next upper coefficient value and returns to step S605.

At step S606, the processor 200 checks if there is merit to use the selected resource.

There is no merit to use the selected resource when the corresponding coefficient value is equal to the value of the coefficient which corresponds to the resource currently used by the selected home base station HBS.

There is merit to use the selected resource otherwise.

If there is merit to use the selected resource, the processor moves to step S607. Otherwise, the processor 200 moves to step S610.

At step S607, the processor 200 allocates the selected resource to the selected home base station HBS. After that, the processor 200 returns to step S601.

At step S610, the processor 200 checks if at least one home base station HBS has not been selected.

If at least one home base station HBS has not been selected, the processor 200 moves to step S611, selects another home base station HBS and returns to step S603.

If each home base station HBS has been selected, the processor 200 moves to step S615.

At step S615, the processor 200 increases the number of possible resources to allocate to the home base stations HBS the coordinator manages by one and returns to step S600.

It has to be noted here that the present invention has been disclosed in an example wherein one resource is allocated to one home base station HBS. The present invention is also applicable when plural resources are allocated to one or plural home base stations.

It has to be noted here that the present invention has been disclosed in an example when resources to be used by home base stations are determined among the home base stations managed by one coordinator 10. The present invention is also applicable when resources to be used by home base stations are determined among the home base stations managed by plural coordinators 10.

Naturally, many modifications can be made to the embodiments of the invention described above without departing from the scope of the present invention.

## Claims

1. Method for determining which resource among a group of resources of a wireless cellular telecommunication network has to be allocated to a home base station among a group of home base stations, **characterised in that** the method comprises the steps of:
- determining, for each resource of the group of resources, the usage of the resource by the home base stations of the group of home base stations,
- selecting the resource of which the usage is the lowest among the determined usages,
- checking if the selected resource is used by neighbouring home base stations of the home base station,
- determining that the selected resource has to be used by the home base station if the selected resource is not used by the or each neighbouring home base station of the home base station.

2. Method according to claim 1, **characterised in that** the selected resource has not to be used by the home base station if the usage of the selected resource is equal to the usage of the resource currently used by the home base station.

3. Method according to claim 1 or 2, **characterised in that** the method is executed iteratively a predetermined number of times.

4. Method according to claim 1 or 2, **characterised in that** the method is executed as far as none of the home base station uses a same resource as one neighbouring home base station of the home base station.

5. Method according to claim 3, **characterised in that** the method comprises further step of increasing the group of resources as far as none of the home base station uses a same resource as one neighbouring home base station of the home base station.

6. Method according to any of the claims 1 to 5, **characterised in that** the method is executed by the home base station, the usages of the resources are determined from the usages of other home base stations of the group of home base stations received by the home base station and **in that** the method comprises further step of transferring the usage of resources by the home base station to each other home base station of which the usage of resources is not received by the home base station.

7. Method according to claim 6, **characterised in that** the method is executed by each home base station of the group of home base stations and **in that** each home base station waits a time duration which is different from the time duration each home base station waits for the reception of the usages of other home base stations of the group of home base stations.

8. Method according to any of the claims 1 to 5, **characterised in that** the method is executed by a coordinator which manages the group of home base stations.

9. Device for determining which resource among a group of resources of a wireless cellular telecommunication network has to be allocated to a home base station among a group of home base stations, **characterised in that** the device comprises:
- means for determining, for each resource of the group of resources, the usage of the resource by the home base stations of the group of home base stations,
- means for selecting the resource of which the usage is the lowest among the determined usages,
- means for checking if the selected resource is used by neighbouring home base stations of the home base station,
- means for determining that the selected resource has to be used by the home base station if the selected resource is not used by the or each neighbouring home base station of the home base station.

10. Device according to claim 9, **characterised in that** the device is included in each home base station of the group of base stations.

11. Device according to claim 9, **characterised in that** the device is included in a coordinator which manages the group of home base stations.

12. Computer program which can be directly loadable into a programmable device, comprising instructions or portions of code for implementing the steps of the method according to claims 1 to 8, when said computer program is executed on a programmable device.
